# FASCICULE DE BREVET EUROPEEN

(11) **EP 1 605 748 B1**
(45) Date de publication et mention de la délivrance du brevet: **02.08.2006**
(21) Numéro de dépôt: 04718673.9
(22) Date de dépôt: 09.03.2004
(51) Int. Cl.: A01D 57/20

(54) **MACHINE POUR GROUPER DES PRODUITS TELS QUE DE L'HERBE**
VORRICHTUNG UM PRODUKTE WIE GRAS ZU GRUPPIEREN
MACHINE FOR GATHERING PRODUCTS SUCH AS GRASS

(30) Priorité: 17.03.2003 FR 0303442
(43) Date de publication de la demande: 21.12.2005
(73) Titulaire: KUHN S.A., 67706 Saverne Cedex (FR)
(72) Inventeur: GEISER, Jens, 38173 Dettum (DE)
(74) Mandataire: Andres, Jean-Claude
(86) Numéro de dépôt international: PCT/FR2004/000562
(87) Numéro de publication internationale: WO 2004/085115

(56) Documents cités:
- CA-A- 1 267 292
- DE-A- 19 645 629
- US-A- 4 519 190
- US-A1- 2003 074 876

## Description

La présente invention se rapporte à une machine pour grouper des produits tels que de l'herbe, du foin ou de la paille, qui se trouvent sur le sol, comportant notamment un bâti principal portant un premier dispositif de ramassage latéral auquel est associé un premier dispositif d'andainage et un deuxième dispositif de ramassage latéral auquel est associé un deuxième dispositif d'andainage , tel que décrit dans le document DE-A-19645629.

Sur une machine connue de ce genre les dispositifs de ramassage sont séparés et se situent l'un sur le côté droit et l'autre sur le côté gauche du bâti principal. Cet agencement permet de ramasser des produits préalablement mis en andains et de les déplacer latéralement sans qu'ils soient en contact avec le sol. Ils peuvent alors être déposés sur un des côtés ou des deux côtés de la machine pour former des andains de plus gros volume.

Cette machine n'est notamment pas appropriée au ramassage et à fandainage de produits étalés sur toute la surface du sol. Son champ d'utilisation est ainsi relativement limité.

La présente invention a pour but de remédier aux inconvénients des machines connues. Elle doit notamment proposer une machine qui est à la fois capable de ramasser des produits déjà andainés et des produits étalés sur toute la surface du sol et de les déplacer latéralement sans qu'ils soient en contact avec le sol.

A cet effet et selon la revendication 1, une importante caractéristique de l'invention consiste en ce que le bâti principal porte en plus un dispositif de ramassage central auquel est associé un troisième dispositif d'andainage et que ledit dispositif de ramassage central et ledit troisième dispositif d'andainage sont déplaçables par rapport au bâti de manière à pouvoir être transposés dans une première position dans laquelle ils sont alignés avec les premiers et deuxièmes dispositifs de ramassage et dispositifs d'andainage et sont sensiblement adjacents à ceux-ci ainsi que dans au moins une deuxième position dans laquelle ils sont décalés par rapport auxdits premiers et deuxièmes dispositifs de ramassage et dispositifs d'andainage. Dans cette deuxième position, le dispositif de ramassage central et le troisième dispositif d'andainage peuvent notamment être décalés en hauteur.

Dans la première position, les dispositifs de ramassage ramassent les produits sur toute la largeur de la machine. Ces produits peuvent ainsi être étalés sur la surface du sol ou bien se présenter sous la forme d'andains de faible volume préalablement formés par exemple au moyen d'une faucheuse-andaineuse. Les produits ramassés parviennent alors sur les dispositifs d'andainage qui les déplacent latéralement de l'un à l'autre sans qu'ils soient en contact avec le sol et les déposent sur un des côtés de la machine sous la forme d'un andain de gros volume.

Dans la deuxième position, les premiers et deuxièmes dispositifs de ramassage ramassent les produits qui se trouvent au sol sous forme d'andains de faible volume et les font parvenir à leurs dispositifs d'andainage respectifs. Ceux-ci peuvent alors être entraînés de sorte qu'ils déplacent ces produits vers le centre de la machine pour former un andain central de plus gros volume. Il est cependant également possible d'entraîner les dispositifs d'andainage de sorte qu'ils déplacent les produits vers les côtés extérieurs de la machine en vue de former des andains de gros volume en plusieurs passages.

Selon une autre caractéristique de l'invention le troisième dispositif d'andainage est associé à un déflecteur qui est déplaçable par rapport audit dispositif d'andainage. Ce déflecteur est agencé de sorte qu'il se déplace automatiquement d'une position sensiblement verticale qu'il occupe lorsque le dispositif de ramassage central et le troisième dispositif d'andainage se situent dans leur première position, dans une position sensiblement horizontale lorsque lesdits dispositifs occupent leur deuxième position et inversement.

D'autres caractéristiques et avantages de l'invention ressortiront de la description qui va suivre et qui se réfère aux dessins annexés qui représentent, à titre d'exemples non limitatifs, quelques formes de réalisation de la machine selon l'invention.

Dans ces dessins :
- la figure 1 représente une vue de dessus partielle d'une machine selon l'invention en position de travail,
- la figure 2 représente, à plus grande échelle, une vue de dessus du dispositif de ramassage central de la machine,
- la figure 3 représente une vue de côté du dispositif de ramassage central illustré sur la figure 2,
- la figure 4 représente une vue analogue à celle de la figure 3, avec le dispositif de ramassage central dans une autre position,
- la figure 5 représente une vue de côté d'une variante de réalisation du dispositif de ramassage central,
- la figure 6 représente une vue analogue à celle de la figure 5, avec le dispositif de ramassage central dans une autre position.

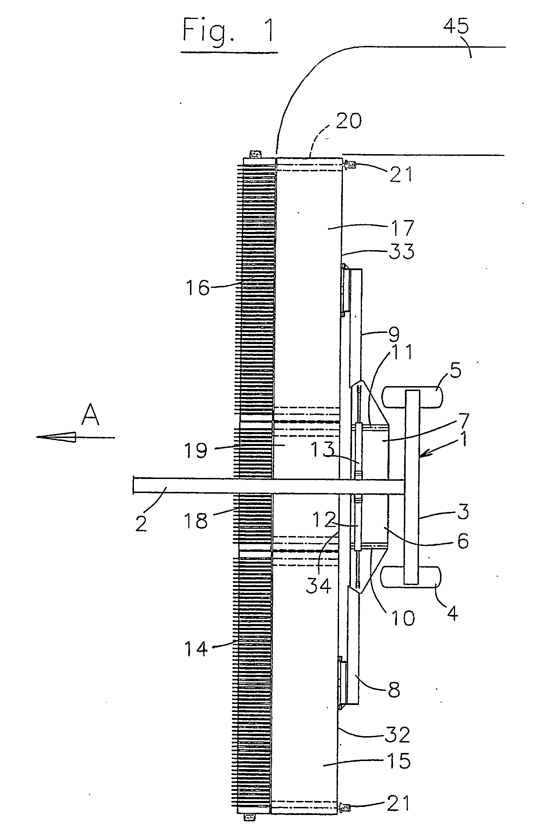

Telle qu'elle est représentée sur la figure 1, la machine selon l'invention comporte un bâti principal (1). Celui-ci est constitué par une poutre centrale (2) qui possède à son extrémité avant un système d'accouplement (non représenté) pour l'accrocher à un tracteur permettant d'animer et de déplacer la machine dans une direction d'avancement (A). La poutre (2) possède à son extrémité arrière, une traverse (3) avec deux roues de déplacement (4, 5) qui reposent sur le sol. Cette poutre (2) comporte en sus deux supports latéraux (6 et 7) sur lesquels sont articulés des bras (8 et 9) au moyen d'axes (10 et 11) qui sont sensiblement parallèles à la poutre (2). Entre la poutre (2) et les bras (8 et 9) sont en sus disposés des vérins hydrauliques (12 et 13) permettant de déplacer ces bras (8 et 9) autour desdits axes (10 et 11) dans des plans sensiblement verticaux.

L'extrémité extérieure du premier bras (8) porte un premier dispositif de ramassage (14) du type pick-up auquel est associé un premier dispositif d'andainage (15). Ces deux dispositifs (14 et 15) forment un ensemble qui peut se déplacer sur le sol au moyen de roues ou de patins situés sous lesdits dispositifs.

L'extrémité extérieure du deuxième bras (9) porte un deuxième dispositif de ramassage (16) du type pick-up auquel est associé un deuxième dispositif d'andainage (17). Ils forment également un ensemble qui peut se déplacer sur le sol au moyen de roues ou de patins placés sous lesdits dispositifs (16 et 17).

Le bâti principal (1) porte en sus un dispositif de ramassage central (18) du type pick-up auquel est associé un troisième dispositif d'andainage (19). Chaque dispositif d'andainage (15, 17 et 19) est constitué par une bande transporteuse guidée par des rouleaux (20). Un des rouleaux de guidage (20) de la bande transporteuse de chacun des dispositifs d'andainage (15, 17 et 19) est entraîné en rotation, par exemple au moyen d'un moteur hydraulique (21), de sorte que la bande correspondante se déplace dans sa partie supérieure vers la droite ou vers la gauche. Les dispositifs de ramassage (14, 16 et 18) du type pick-up peuvent également être entraînés par des moteurs hydrauliques.

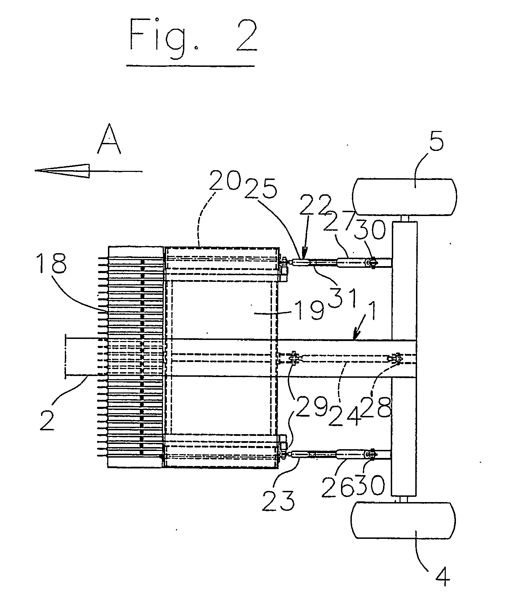

Le dispositif de ramassage central (18) et le troisième dispositif d'andainage (19) sont agencés de manière à être déplaçable en hauteur par rapport au bâti principal (1). Ils peuvent ainsi être transposés dans une première position dans laquelle ils sont alignés avec les premiers et les deuxièmes dispositifs de ramassage (14 et 16) et les premiers et les deuxièmes dispositifs d'andainage (15 et 17) et sont sensiblement adjacents à ceux-ci ainsi que dans une deuxième position dans laquelle ils sont décalés par rapport auxdits premiers et deuxièmes dispositifs de ramassage (14 et 16) et dispositifs d'andainage (15 et 17). Dans cette deuxième position ils peuvent être décalés en hauteur de sorte qu'ils soient hors service, c'est-à-dire qu'ils n'entrent pas en contact avec les produits. Le dispositif de ramassage central (18) et le troisième dispositif d'andainage (19) sont reliés au bâti principal (1) au moyen d'un mécanisme de relevage (22) (voir figures 2 à 6). Celui-ci se compose de bras de liaison (23, 24, 25) et d'un ou plusieurs vérins hydrauliques (26, 27). Ces bras de liaison (23, 24, 25) sont articulés sur le bâti principal (1) au moyen d'axes (28) et sur le troisième dispositif d'andainage (19) qui est lié au dispositif de ramassage central (18), au moyen d'axes (29). Ces axes d'articulation (28 et 29) sont sensiblement horizontaux et perpendiculaires à la direction d'avancement (A). Les vérins hydrauliques (26 et 27) sont articulés sur le bâti principal (1) au moyen d'axes (30) et sur les bras de liaison (23 et 25) au moyen d'axes (31). Ces axes (30 et 31) sont sensiblement parallèles aux axes d'articulation (28 et 29) des bras de liaison (23, 24 et 25).

Les bras de liaison (23, 24 et 25) se situent dans deux plans (B et C) décalés l'un par rapport à l'autre dans le sens de la hauteur. Dans l'exemple représenté le mécanisme de relevage (22) comporte trois bras de liaison (23, 24 et 25) dont deux (23 et 25) se situent dans le même plan (B) et dont le troisième (24) se situe dans le deuxième plan (C). Ce troisième bras (24) se situe sensiblement à égales distances des deux autres bras (23 et 25). Le mécanisme de relevage pourrait aussi comporter quatre bras de liaison situés deux à deux dans le même plan (B ou C).

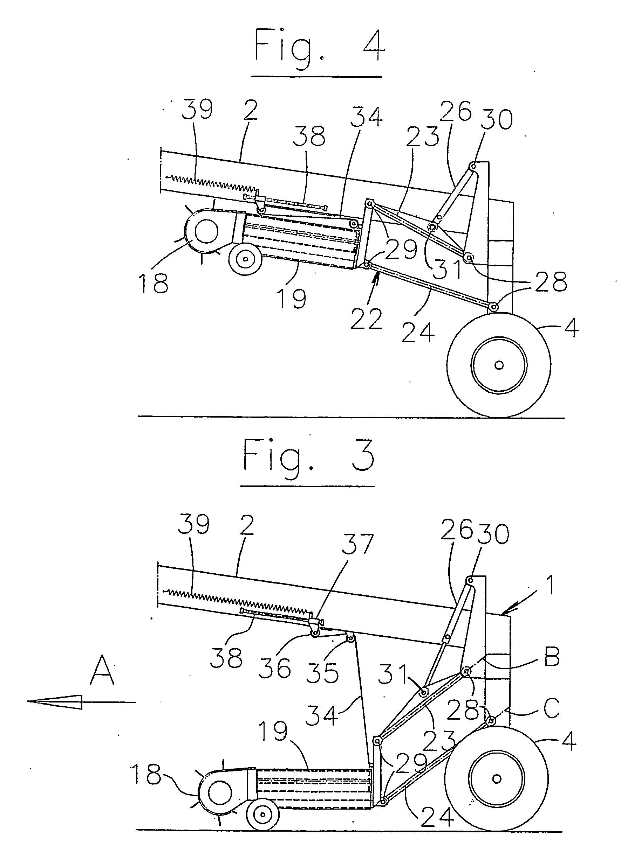

Des déflecteurs (32, 33, 34) pour guider les produits déplacés sont disposés sur le côté arrière des dispositifs d'andainage (15, 17 et 19). Il ressort des figures 3 à 6 que le déflecteur (34) associé au troisième dispositif d'andainage (19) est déplaçable dans au moins deux positions différentes. Ce déflecteur (34) est sensiblement vertical dans la première position du dispositif de ramassage central (18) et du troisième dispositif d'andainage (19) et est sensiblement horizontal lorsque lesdits dispositifs occupent leur deuxième position. Le passage de la position sensiblement verticale dans la position sensiblement horizontale et vice versa s'effectue automatiquement lors du déplacement des dispositifs (18 et 19) au moyen du mécanisme de relevage (22).

Dans l'exemple représenté sur les figures 3 et 4 le déflecteur (34) est souple. Il est fixé à une de ses extrémités au troisième dispositif d'andainage (19) et à son autre extrémité à la poutre (2) du bâti principal (1). Il passe sur deux galets (35 et 36) dont l'un (35) est fixe par rapport au bâti principal (1) et l'autre est mobile le long de la poutre (2). Le galet mobile (36) est monté sur des supports latéraux (37) qui sont déplaçables sur des guides (38) longitudinaux fixés sur les flancs de la poutre (2) du bâti principal (1). Au moins un des supports latéraux (37) est relié à un ressort de traction (39) qui le tire dans la direction d'avancement (A).

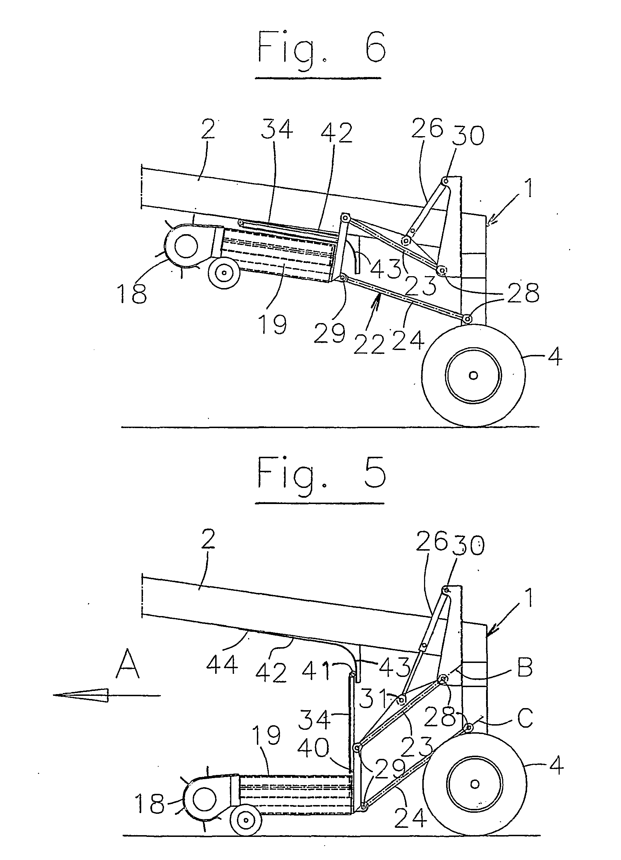

Dans l'exemple représenté sur les figures 5 et 6 le déflecteur (34) est rigide. A l'une de ses extrémités il est articulé sur le troisième dispositif d'andainage (19) au moyen d'un axe sensiblement horizontal (40). L'autre extrémité de ce déflecteur (34) comporte un galet (41). Celui-ci est guidé sur un rail (42) qui est lié à la poutre (2). Ce rail (42) présente deux parties (43 et 44) dont l'une est sensiblement verticale et l'autre est sensiblement horizontale.

Durant le travail, la machine est accrochée à un tracteur qui la déplace dans la direction (A). Dans la première position de travail les bras (8 et 9) sont abaissés en position sensiblement horizontale à l'aide des vérins hydrauliques (12 et 13), de sorte que les premier et deuxième dispositifs de ramassage (14 et 16) s'appuient sur le sol. Le dispositif de ramassage central (18) est également abaissé au moyen du mécanisme de relevage (22), de sorte qu'il touche le sol. Les trois dispositifs de ramassage (14, 18 et 16) se situent alors côte à côte sur une même ligne. Ils sont animés de sorte qu'ils ramassent sur toute la largeur de la machine les produits étalés sur le sol et les acheminent sur les dispositifs d'andainage (15, 19 et 17). Ces derniers sont également animés et déplacent lesdits produits, sans qu'ils soient en contact avec le sol, vers un des côtés de la machine en vue de la formation d'un andain latéral (45) de gros volume. Les déflecteurs (32, 34 et 33) sont sensiblement verticaux et empêchent les produits de glisser sur le côté arrière des dispositifs d'andainage (15, 19 et 17).

Dans la deuxième position de travail, les premier et deuxième dispositifs de ramassage (14 et 16) et les dispositifs d'andainage (15 et 17) correspondants occupent les mêmes positions que celles décrites ci-dessus. Le dispositif de ramassage central (18) et le dispositif d'andainage correspondant (19) sont déplacés vers le haut, au moyen du mécanisme de relevage (22), jusqu'à proximité de la poutre (2). A cet effet, les vérins hydrauliques (26 et 27) sont commandés pour qu'ils se rétractent. Ils font alors pivoter les bras de liaison (23, 24 et 25) autour de leurs axes d'articulation (28) de sorte qu'ils assurent ledit soulèvement. Le dispositif de ramassage central (18) et le troisième dispositif d'andainage (19) sont alors décalés en hauteur par rapport aux dispositifs voisins et sont en quelque sorte hors service.

Simultanément, le déflecteur souple (34) selon le mode de réalisation qui est représenté sur les figures 3 et 4, est tiré vers l'avant par le ressort (39) et le galet mobile (36) dont les supports latéraux (37) se déplacent sur les guides (38). Ce déflecteur (34) se replie alors autour des galets (35 et 36) et occupe une position sensiblement horizontale entre la poutre (2) et le dispositif d'andainage (19).

Dans le mode de réalisation selon les figures 5 et 6 le déflecteur (34) est guidé par le rail (42) lors dudit soulèvement. Il se replie alors vers l'avant autour de l'axe d'articulation (40) et se place dans une position sensiblement horizontale entre la poutre (2) et le dispositif d'andainage (19) afin de permettre un relevage maximal de ce dernier.

Dans cette deuxième position de travail, les premier et deuxième dispositifs de ramassage (14 et 16) sont animés de sorte qu'ils ramassent les produits sur le sol et les acheminent sur les dispositifs d'andainage (15 et 17) correspondants. Ces derniers peuvent alors être entraînés de sorte qu'ils déplacent ces produits vers le milieu de la machine pour former un andain central à l'emplacement libéré par le troisième dispositif d'andainage (19). Ils peuvent aussi être entraînés de sorte qu'ils déplacent les produits vers les côtés pour former des andains latéraux. Dans cette deuxième position de travail la machine peut notamment ramasser des andains de faible volume et les regrouper pour former des andains de plus gros volume. Ces derniers peuvent alors être récoltés par exemple au moyen d'une presse ou d'une ensileuse.

Pour le transport, le dispositif de ramassage central (18) et le troisième dispositif d'andainage (19) sont soulevés dans la position qu'ils occupent dans la deuxième position de travail décrite ci-dessus. Le déflecteur (34) est alors automatiquement replié dans sa position sensiblement horizontale. Les bras (8 et 9) avec leurs dispositifs de ramassage et d'andainage (14, 15, 16 et 17) sont soulevés autour des axes d'articulation (10 et 11) au moyen des vérins hydrauliques (12 et 13), de manière à réduire la largeur de la machine. Dans cette position les déflecteurs (32 et 33) qui sont associés aux premier et deuxième dispositifs d'andainage (15 et 17) peuvent également être repliés vers ces dispositifs (15 et 17) en vue de réduire l'encombrement.

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans sortir pour autant du domaine de protection.

## Revendications

1. Machine pour grouper des produits tels que de l'herbe, du foin ou de la paille, qui se trouvent sur le sol, comportant notamment un bâti principal (1) portant un premier dispositif de ramassage latéral (14) auquel est associé un premier dispositif d'andainage (15) et un deuxième dispositif de ramassage latéral (16) auquel est associé un deuxième dispositif d'andainage (17), ***caractérisée par le fait* que** le bâti principal (1) porte en plus un dispositif de ramassage central (18) auquel est associé un troisième dispositif d'andainage (19) et que ledit dispositif de ramassage central (18) et ledit troisième dispositif d'andainage (19) sont déplaçables par rapport au bâti (1) de manière à pouvoir être transposés dans une première position de travail dans laquelle ils sont alignés avec les premiers et deuxièmes dispositifs de ramassage (14 et 16) et dispositifs d'andainage (15 et 17) et sont sensiblement adjacents à ceux-ci ainsi que dans au moins une deuxième position de travail dans laquelle ils sont décalés par rapport auxdits premiers et deuxièmes dispositifs de ramassage (14 et 16) et dispositifs d'andainage (15 et 17).

2. Machine selon la revendication 1, ***caractérisée par le fait* que** le dispositif de ramassage central (18) et le troisième dispositif d'andainage (19) peuvent être décalés en hauteur.

3. Machine selon la revendication 1 ou 2, ***caractérisée par le fait* que** le dispositif de ramassage central (18) et le troisième dispositif d'andainage (19) sont reliés au bâti principal (1) au moyen d'un mécanisme de relevage (22).

4. Machine selon la revendication 3, ***caractérisée par le fait* que** le mécanisme de relevage (22) se compose de bras de liaison (23, 24 et 25) qui sont articulés sur le bâti principal (1) au moyen d'axes (28) sensiblement horizontaux et perpendiculaires à la direction d'avancement (A) et sur le troisième dispositif d'andainage (19) qui est lié au dispositif de ramassage central (18), au moyen d'axes (29) sensiblement horizontaux et perpendiculaires à la direction d'avancement (A).

5. Machines selon la revendication 4, ***caractérisée par le fait* que** le mécanisme de relevage (22) comporte au moins un vérin hydraulique (26, 27) qui est articulé sur le bâti principal (1) et sur un bras de liaison (23, 25).

6. Machine selon la revendication 4, ***caractérisée par le fait* que** les bras de liaison (23, 24 et 25) se situent dans deux plans (B et C) décalés l'un par rapport à l'autre dans le sens de la hauteur.

7. Machine selon la revendication 6, ***caractérisée par le fait* que** le mécanisme de relevage (22) comporte trois bras de liaison (23, 24 et 25) dont deux (23 et 25) se situent dans le même plan (B) et dont le troisième (24) se situe dans le deuxième plan (C).

8. Machine selon la revendication 7, ***caractérisée par le fait* que** le troisième bras (24) se situe sensiblement à égales distances des deux autres bras (23 et 25).

9. Machine selon l'une quelconque des revendications précédentes, ***caractérisée par le fait* que** des déflecteurs (32, 33, 34) pour guider les produits déplacés sont disposés sur les côtés arrière des dispositifs d'andainage (15, 17 et 19).

10. Machine selon la revendication 9, ***caractérisée par le fait* qu**'au troisième dispositif d'andainage (19) est associé un déflecteur (34) qui est déplaçable par rapport audit dispositif d'andainage (19).

11. Machine selon la revendication 10, ***caractérisée par le fait* que** le déflecteur (34) est déplaçable automatiquement entre une position sensiblement verticale qu'il occupe dans la première position du dispositif de ramassage central (18) et du troisième dispositif d'andainage (19) et une position sensiblement horizontale qu'il occupe dans leur deuxième position.

12. Machine selon la revendication 11, ***caractérisée par le fait* que** le déflecteur (34) est souple et qu'il est fixé à une de ses extrémités au troisième dispositif d'andainage (19) et à son autre extrémité au bâti principal (1).

13. Machine selon la revendication 12, ***caractérisée par le fait* que** le déflecteur (34) passe sur deux galets (35 et 36) dont l'un (35) est fixe par rapport au bâti principal (1) et l'autre (36) est mobile le long du bâti principal (1).

14. Machine selon la revendication 13, ***caractérisée par le fait* que** le galet mobile (36) est monté sur des supports latéraux (37) déplaçables sur de guides (38) fixés au bâti principal (1).

15. Machine selon la revendication 14, ***caractérisée par le fait* qu**'au moins un support latéral (37) est relié à un ressort de traction (39).

16. Machine selon la revendication 11, ***caractérisée par le fait* que** le déflecteur (34) est rigide et qu'il est articulé à une de ses extrémités sur le troisième dispositif d'andainage (19) au moyen d'un axe (40).

17. Machine selon la revendication 16, ***caractérisée par le fait* que** l'autre extrémité du déflecteur (34) est guidée au moyen d'un galet (41) sur un rail (42) fixé au bâti principal (1) en vue de provoquer le déplacement dudit déflecteur entre la position sensiblement verticale et la position sensiblement horizontale.

## Claims

1. Machine for gathering products such as grass, hay or straw, which lie on the ground, comprising in particular a main frame (1) bearing a first lateral gathering device (14) with which a first windrowing device (15) is associated and a second lateral gathering device (16) with which a second windrowing device (17) is associated, ***characterized in* that** the main frame (1) additionally bears a central gathering device (18) with which a third windrowing device (19) is associated and **in that** the said central gathering device (18) and the said third windrowing device (19) can be moved relative to the frame (1) in such a way that they can be transposed into a first work position in which they are aligned with the first and second gathering devices (14 and 16) and windrowing devices (15 and 17) and are substantially adjacent to these and into at least a second work position in which they are offset relative to the said first and second gathering devices (14 and 16) and windrowing devices (15 and 17).

2. Machine as claimed in claim 1, ***characterized in* that** the central gathering device (18) and the third windrowing device (19) can be offset heightwise.

3. Machine as claimed in claim 1 or 2, ***characterized in* that** the central gathering device (18) and the third windrowing device (19) are connected to the main frame (1) by means of a lift mechanism (22).

4. Machine as claimed in claim 3, ***characterized in* that** the lift mechanism (22) is made up of connecting arms (23, 24 and 25) which are articulated to the main frame (1) by means of axes (28) that are substantially horizontal and perpendicular to the direction of forward travel (A) and articulated to the third windrowing device (19) which is connected to the central gathering device (18), by means of axes (29) that are substantially horizontal and perpendicular to the direction of forward travel (A).

5. Machine as claimed in claim 4, ***characterized in* that** the lift mechanism (22) comprises at least one hydraulic ram (26, 27) which is articulated to the main frame (1) and to a connecting arm (23, 25).

6. Machine as claimed in claim 4, ***characterized in* that** the connecting arms (23, 24 and 25) lie in two planes (B and C) that are offset relative to one another in the heightwise direction.

7. Machine as claimed in claim 6, ***characterized in* that** the lift mechanism (22) comprises three connecting arms (23, 24 and 25) of which two (23 and 25) lie in the same plane (B) and of which the third (24) lies in the second plane (C).

8. Machine as claimed in claim 7, ***characterized in* that** the third arm (24) lies substantially at equal distances from the other two arms (23 and 25).

9. Machine as claimed in any one of the preceding claims, ***characterized in* that** deflectors (32, 33, 34) for guiding the displaced products are arranged on the rear sides of the windrowing devices (15, 17 and 19).

10. Machine as claimed in claim 9, ***characterized in* that** associated with the third windrowing device (19) is a deflector (34) that can be moved relative to the said windrowing device (19).

11. Machine as claimed in claim 10, ***characterized in* that** the deflector (34) can be moved automatically between a substantially vertical position that it occupies when the central gathering device (18) and the third windrowing device (19) are in the first position, and a substantially horizontal position that it occupies when they are in their second position.

12. Machine as claimed in claim 11, ***characterized in* that** the deflector (34) is flexible and **in that** it is fixed at one of its ends to the third windrowing device (19) and at its other end to the main frame (1).

13. Machine as claimed in claim 12, ***characterized in* that** the deflector (34) passes over two rollers (35 and 36) of which one (35) is fixed relative to the main frame (1) and the other (36) can move along the main frame (1).

14. Machine as claimed in claim 13, ***characterized in* that** the moving roller (36) is mounted on lateral supports (37) that can move on guides (38) fixed to the main frame (1).

15. Machine as claimed in claim **14, *characterized in* that** at least one lateral support (37) is connected to a draw-spring (39).

16. Machine as claimed in claim 11, ***characterized in* that** the deflector (34) is rigid and **in that** it is articulated at one of its ends to the third windrowing device (19) by means of an axis (40).

17. Machine as claimed in claim 16, ***characterized in* that** the other end of the deflector (34) is guided by means of a roller (41) on a rail (42) fixed to the main frame (1) with a view to causing said deflector to move between the substantially vertical position and the substantially horizontal position.

## Patentansprüche

1. Maschine zum Gruppieren von Produkten, wie beispielsweise Gras, Heu oder Stroh, die sich am Boden befinden, mit insbesondere einem Hauptgestell (1), das eine erste seitliche Sammelvorrichtung (14), mit der eine erste Schwadlegevorrichtung (15) verbunden ist, und eine zweite seitliche Sammelvorrichtung (16), mit der eine zweite Schwadlegevorrichtung (17) verbunden ist, trägt, ***dadurch gekennzeichnet,* dass** das Hauptgestell (1) zusätzlich eine mittlere Sammelvorrichtung (18) trägt, mit der eine dritte Schwadlegevorrichtung (19) verbunden ist, und dass die mittlere Sammelvorrichtung (18) und die dritte Schwadlegevorrichtung (19) in Bezug auf das Gestell (1) verschiebbar sind, um in eine erste Arbeitsstellung, in der sie mit den ersten und den zweiten Sammelvorrichtungen (14 und 16) und Schwadlegevorrichtungen (15 und 17) ausgerichtet sind und im Wesentlichen an diese angrenzen, und in mindestens eine zweite Arbeitsstellung gebracht werden zu können, in der sie in Bezug auf die ersten und die zweiten Sammelvorrichtungen (14 und 16) und Schwadlegevorrichtungen (15 und 17) versetzt sind.

2. Maschine nach Anspruch 1, ***dadurch gekennzeichnet,* dass** die mittlere Sammelvorrichtung (18) und die dritte Schwadlegevorrichtung (19) in der Höhe versetzt sein können.

3. Maschine nach Anspruch 1 oder 2, ***dadurch gekennzeichnet,* dass** die mittlere Sammelvorrichtung (18) und die dritte Schwadlegevorrichtung (19) mit dem Hauptgestell (1) mit Hilfe eines Hubmechanismus (22) verbunden sind.

4. Maschine nach Anspruch 3, ***dadurch gekennzeichnet,* dass** der Hubmechanismus (22) aus Verbindungsarmen (23, 24 und 25) besteht, die an dem Hauptgestell (1) mit Hilfe von im Wesentlichen horizontalen und auf die Vorschubrichtung (A) senkrechten Achsen (28) und an der dritten Schwadlegevorrichtung (19), die mit der mittleren Sammelvorrichtung (18) verbunden ist, mit Hilfe von im Wesentlichen horizontalen und zur Vorschubrichtung (A) senkrechten Achsen (29) angelenkt sind.

5. Maschine nach Anspruch 4, ***dadurch gekennzeichnet,* dass** der Hubmechanismus (22) mindestens einen Hydraulikzylinder (26, 27) umfasst, der an dem Hauptgestell (1) und an einem Verbindungsarm (23, 25) angelenkt ist.

6. Maschine nach Anspruch 4, ***dadurch gekennzeichnet,* dass** sich die Verbindungsarme (23, 24 und 25) in zwei Ebenen (B und C) befinden, die zueinander in Höhenrichtung versetzt sind.

7. Maschine nach Anspruch 6, ***dadurch gekennzeichnet,* dass** der Hubmechanismus (22) drei Verbindungsarme (23, 24 und 25) umfasst, von denen sich zwei (23 und 25) in derselben Ebene (B) befinden, und von denen sich der dritte (24) in der zweiten Ebene (C) befindet.

8. Maschine nach Anspruch 7, ***dadurch gekennzeichnet,* dass** sich der dritte Arm (24) im Wesentlichen in gleichem Abstand zu den beiden anderen Armen (23 und 25) befindet.

9. Maschine nach irgend einem der vorhergehenden Ansprüche, ***dadurch gekennzeichnet,* dass** Ablenker (32, 33, 34) zur Führung der verschobenen Produkte an den Rückseiten der Schwadlegevorrichtungen (15, 17 und 19) angeordnet sind.

10. Maschine nach Anspruch 9, ***dadurch gekennzeichnet,* dass** mit der dritten Schwadlegevorrichtung (19) ein Ablenker (34) verbunden ist, der in Bezug auf die Schwadlegevorrichtung (19) verschiebbar ist.

11. Maschine nach Anspruch 10, ***dadurch gekennzeichnet,* dass** der Ablenker (34) automatisch zwischen einer im Wesentlichen vertikalen Stellung, die es in der ersten Stellung der mittleren Sammelvorrichtung (18) und dritten Schwadlegevorrichtung (19) einnimmt, und einer im Wesentlichen horizontalen Stellung, die es in ihrer zweiten Stellung einnimmt, verschiebbar ist.

12. Maschine nach Anspruch 11, ***dadurch gekennzeichnet,* dass** der Ablenker (34) biegsam ist und dass er an einem seiner Enden an der dritten Schwadlegevorrichtung (19) und an seinem anderen Ende am Hauptgestell (1) befestigt ist.

13. Maschine nach Anspruch 12, ***dadurch gekennzeichnet,* dass** der Ablenker (34) auf zwei Rollen (35 und 36) verläuft, von denen eine (35) in Bezug auf das Hauptgestell (1) fest und die andere (36) entlang des Hauptgestells (1) beweglich ist.

14. Maschine nach Anspruch 13, ***dadurch gekennzeichnet,* dass** die bewegliche Rolle (36) auf Seitenstützen (37) montiert ist, die auf Führungen (38), die am Hauptgestell (1) befestigt sind, verschiebbar sind.

15. Maschine nach Anspruch 14, ***dadurch gekennzeichnet,* dass** mindestens eine Seitenstütze (37) mit einer Zugfeder (39) verbunden ist.

16. Maschine nach Anspruch 11, ***dadurch gekennzeichnet,* dass** der Ablenker (34) starr ist und an einem seiner Enden an der dritten Schwadlegevorrichtung (19) mit Hilfe einer Achse (40) angelenkt ist.

17. Maschine nach Anspruch 16, ***dadurch gekennzeichnet,* dass** das andere Ende des Ablenkers (34) mit Hilfe einer Rolle (41) auf einer Schiene (42) geführt wird, die am Hauptgestell (1) befestigt ist, um die Verschiebung des Ablenkers zwischen der im Wesentlichen vertikalen Stellung und der im Wesentlichen horizontalen Stellung zu bewirken
